# FASCICULE DE BREVET EUROPEEN

(11) **EP 0 867 961 B1**
(45) Date de publication et mention de la délivrance du brevet: **02.05.2001**
(21) Numéro de dépôt: 98400663.5
(22) Date de dépôt: 23.03.1998
(51) Int. Cl.: H01M 6/10, H01M 2/26

(54) **Générateur électrochimique à bobineau spiralé**
Elektrochemischer Generator mit spiralförmigen gewickelten Elektroden
Electrochemical generator with spirally wound electrodes

(30) Priorité: 24.03.1997 FR 9703538
(43) Date de publication de la demande: 30.09.1998
(73) Titulaire: ALCATEL, 75008 Paris (FR)
(72) Inventeur: Blancheton, Olivier, 33130 Bègles (FR)
(74) Mandataire: Laroche, Danièle

(56) Documents cités:
- EP-A- 0 391 720
- FR-A- 2 094 491
- GB-A- 2 274 737
- PATENT ABSTRACTS OF JAPAN vol. 012, no. 476 (E-693), 13 décembre 1988 & JP 63 195965 A (MATSUSHITA ELECTRIC IND CO LTD), 15 août 1988,
- PATENT ABSTRACTS OF JAPAN vol. 013, no. 366 (E-806), 15 août 1989 & JP 01 122574 A (MATSUSHITA ELECTRIC IND CO LTD), 15 mai 1989,

## Description

L'invention concerne un générateur électrochimique (pile, accumulateur, supercondensateur, etc.) comprenant un faisceau électrochimique formé d'au moins deux électrodes de polarité contraire et d'au moins un séparateur.

Dans le cas des générateurs spiralés de forme cylindrique, le faisceau électrochimique est un bobineau spiralé formé de l'enroulement de l'électrode positive et de l'électrode négative alternant avec une première et une seconde couche de séparateur. Celui-ci sert à isoler électriquement l'électrode positive de la négative, et à isoler les parties extérieures du générateur respectivement positive et négative.

Le bobineau formé est introduit dans le godet métallique étanche cylindrique. On introduit dans le bobineau un électrolyte qui permettra l'échange ionique. Un couvercle, isolé du godet, est relié, généralement par soudure, à l'électrode positive par l'intermédiaire d'une connexion et formera le pôle positif. Une gorge intérieure effectuée dans la partie supérieure du godet permet de positionner horizontalement le couvercle dans le godet. Le serrage du godet sur le couvercle par l'intermédiaire d'un joint permet l'étanchéité de l'accumulateur.

Il convient d'éviter la mise en court-circuit du générateur électrochimique par contact constant ou ponctuel entre la connexion reliant le couvercle et l'électrode positive, et le haut de l'électrode négative.

Ce contact peut s'effectuer lors du montage du générateur, il est alors décelable lors du contrôle de fabrication ; mais il survient surtout lors de l'utilisation normale du générateur en charge et décharge par les effets thermiques (dilatation) et les vibrations. Les courts-circuits entre la connexion et le haut de l'électrode sont liés à des aléas de montage tels que :
- une dérive de l'électrode négative par rapport au séparateur lors du spiralage,
- un défaut de position du couvercle lors de la soudure de la connexion,
- un défaut de pliage de la connexion lors de la fermeture du couvercle.

Pour remédier à ce problème, le document JP-A-7 014 572 enseigne d'ajouter au-dessus du bobineau une rondelle isolante. Cette solution présente l'inconvénient de nécessiter une opération supplémentaire dans la fabrication et d'augmenter le prix de revient du générateur. De plus, le positionnement correct de la rondelle dans le générateur, que ce soit manuellement ou automatiquement, n'est pas facile, compte tenu de la présence de la connexion, et un défaut de positionnement risque de conduire à des problèmes d'étanchéité ou de positionnement du couvercle dans le générateur (inclinaison).

Le document FR-2 094 491 ) décrit un générateur électrochimique dans lequel les parties conductrices des électrodes font saillie et sont fendues et repliées perpendiculairement afin de former une surface d'appui présentant l'aspect d'écailles de poisson. Les extrémités dépassantes du séparateur se trouve rabattues et s'engage plus ou moins entre deux écailles consécutives, ce qui a pour effet d'améliorer l'élasticité de la surface d'appui. De cette façon on obtient un recouvrement qui rend très difficile l'imprégnation du bobineau par l'électrolyte et la circulation des flux gazeux lors du fonctionnement du générateur.

Le but de l'invention est de proposer une solution pour éviter les courts-circuits, qui ne présente pas les inconvénients précités.

Ce but est atteint selon l'invention dans un générateur électrochimique comprenant un faisceau électrochimique qui est un bobineau spiralé formé de l'enroulement d'une électrode positive et d'une électrode négative encadrant un séparateur. L'une au moins desdites électrodes a une connexion qui dépasse dudit faisceau, et ledit séparateur comporte une partie qui se projette hors de l'empilage et qui vient s'intercaler entre le bord desdites électrodes et ladite connexion repliée. Ce générateur est caractérisé par le fait que ledit séparateur comprend une première et une deuxième couches formées par les deux moitiés d'un même bande, ladite partie qui se projette étant localisée sur la partie centrale de ladite bande.

Cette projection, ou dépassement hors du faisceau, est évidemment supérieure au dépassement de sécurité usuel du séparateur par rapport à l'électrode, de manière à former une protection interposable entre la connexion et l'empilage.

Pour un générateur spiralé, la partie qui dépasse ainsi du faisceau est localisée sur une ou plusieurs spires intérieures de l'enroulement spiralé, par exemple les deux premières spires intérieures.

Lorsque, comme cela se fait classiquement, les deux couches du séparateur précitées sont formées par les deux moitiés d'une même bande de séparateur, la partie qui se projette est localisée sur une partie centrale de ladite bande.

Ladite partie centrale dépasse d'un seul côté de la bande, avantageusement d'environ 1 à 3 mm, et de préférence de 1 à 2 mm, par rapport au reste de la bande.

La partie centrale qui dépasse peut être constituée par la bande elle-même, simplement découpée de manière à former ce dépassement dans un de ses bords. On peut aussi utiliser pour former la partie dépassante une couche de renfort central, connue sous le nom d'additif, employée classiquement. Cet additif a pour rôle habituel de renforcer le séparateur au démarrage des électrodes (centre du bobineau), pour le protéger de l'agressivité des bords et des cassures des électrodes positives et négatives.

Cet additif, utilisé selon l'invention pour former la partie à plus grande hauteur de la bande de séparateur, peut être soit une pièce rapportée, réalisée dans la même matière que la bande ou dans une matière différente (par exemple soudée par ultrasons en quelques points à la bande), soit une patte formée dans la bande et repliée sur elle-même.

L'invention s'applique de préférence au générateurs de forme cylindrique ou prismatique de petit format. Elle concerne notamment les couples nickel-cadmium (Ni-Cd), nickel-métal hydrurable (Ni-MH) et les générateurs au lithium comme le couple lithium-carbone (Li-C ou Li-ion).

D'autres caractéristiques et avantages ressortiront de la description ci-après, pour laquelle on se référera aux dessins annexés sur lesquels :
- la figure 1 est une vue en coupe d'un générateur incorporant l'invention (l'échelle n'est pas respectée, pour permettre de mieux voir les dépassements),

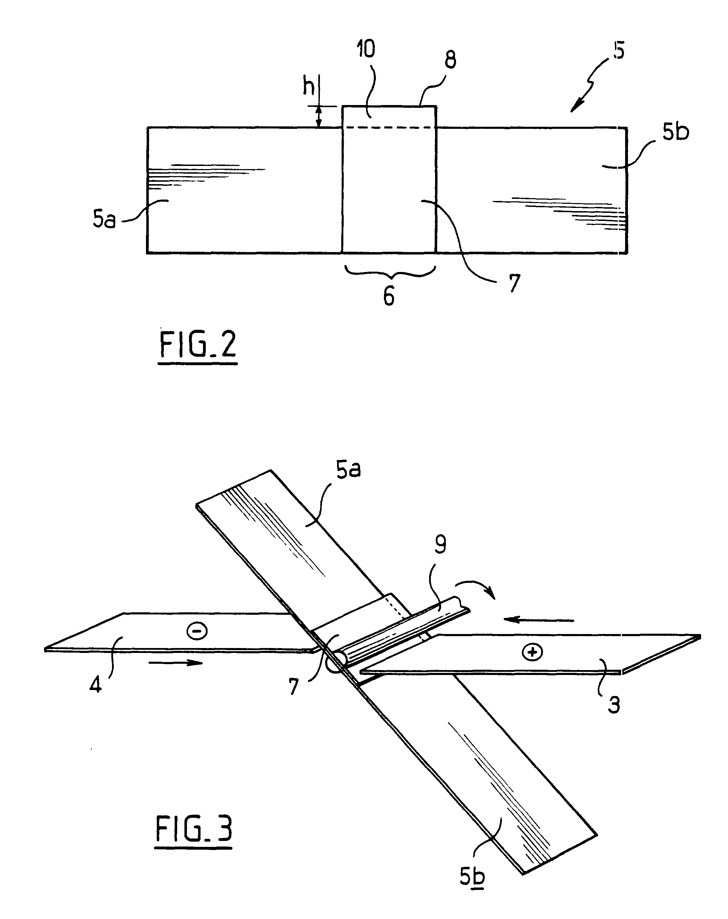

- la figure 2 est une vue de face d'un séparateur et de son additif conforme à l'invention,
- la figure 3 est un schéma montrant en perspective les éléments constitutifs d'un bobineau spiralé conforme à l'invention.

Le générateur cylindrique 1 comprend un godet cylindrique 2 dans lequel est logé le bobineau spiralé des électrodes.

Celui-ci comporte une plaque rectangulaire souple d'électrode positive 3 et une plaque rectangulaire souple d'électrode négative 4 et une bande rectangulaire 5 de séparateur comprenant deux moitiés 5a et 5b.

Dans la partie centrale 6 de la bande 5 est superposé l'additif 7, sous forme d'une pièce rectangulaire dépassant du côté supérieur de la bande d'une hauteur h.

L'additif 7 peut être une pièce rapportée dans la même matière que le séparateur (feutre) et soudée par exemple par ultrasons en quatre points, ou bien il peut être constitué d'une patte découpée dans le flan constitutif de la bande 5 et repliée sur elle-même le long d'une ligne 8, constituant après pliage le bord supérieur de l'additif 7.

Comme connu dans la fabrication des générateurs à bobineau spiralé, des broches 9 viennent autour de la partie centrale 6 de la bande et permettent son enroulement en spires successives où alternent l'électrode positive 3, la moitié 5b du séparateur 5, l'électrode négative 4 et la moitié 5a du séparateur 5.

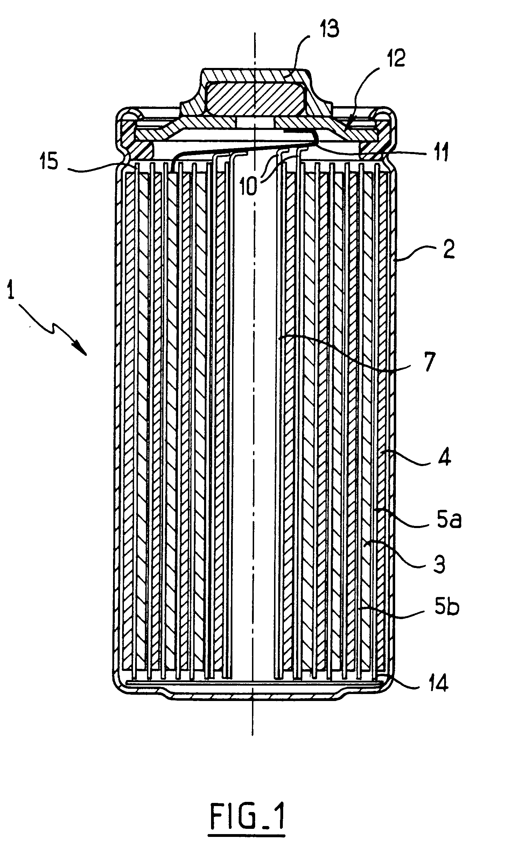

Après l'enroulement, la partie 10 de l'additif 7 qui dépasse de la bande 5 se retrouve sur la ou les spires les plus intérieures du bobineau, par exemple deux spires connues représentées sur la figure 1.

De la sorte, lorsqu'on relie l'électrode positive 3 par une connexion 11 au couvercle 12 du godet, en contact électrique avec la borne positive 13, les dépassements 10 des spires centrales du bobineau empêchent que la connexion 11 vienne accidentellement contacter l'électrode négative.

La figure 1 montre que, en dehors des dépassements plus grands 10 au centre du bobineau, le séparateur 5 fait saillie (référence 14, 15) en haut et en bas des électrodes d'une valeur usuelle de dépassement de 1,5 à 2 mm permettant d'éviter la mise en contact accidentel des électrodes positives et négatives lors du spiralage.

## Revendications

1. Générateur électrochimique comprenant un faisceau électrochimique qui est un bobineau spiralé formé de l'enroulement d'une électrode positive (3) et d'une électrode négative (4) encadrant un séparateur (5), l'une au moins desdites électrodes ayant une connexion (11) qui dépasse dudit faisceau, et ledit séparateur comportant une partie (10) qui se projette hors de l'empilage et qui vient s'intercaler entre le bord desdites électrodes (3, 4) et ladite connexion (11) repliée, caractérisé par le fait que ledit séparateur (5) comprend une première (5a) et une deuxième (5b) couches formées par les deux moitiés d'un même bande, ladite partie (10) qui se projette étant localisée sur la partie centrale (6) de ladite bande.

2. Générateur selon la revendication 1, dans lequel ladite partie qui se projette est localisée sur une ou plusieurs spires intérieures de l'enroulement spiralé.

3. Générateur selon l'une des revendications 1 et 2, dans lequel ladite partie centrale dépasse d'un seul côté du reste de la bande.

4. Générateur selon la revendication 3, dans lequel ladite partie centrale dépasse d'environ 1 à 3 mm du reste de la bande.

5. Générateur selon l'une des revendications précédentes, caractérisé en ce que ladite partie centrale est constituée par la bande elle-même.

6. Générateur selon l'une des revendications 1 à 4, caractérisé en ce que ladite partie centrale (6) de ladite bande est constituée par un additif (7) formant une couche de renfort.

7. Générateur selon la revendication 6, caractérisé en ce que l'additif est constitué par une patte formée dans la bande elle-même et repliée sur la bande.

8. Générateur selon la revendication 6, caractérisé en ce que l'additif est réalisé dans la même matière que la bande.

## Patentansprüche

1. Elektrochemischer Generator mit einem elektrochemischen Bündel, das eine spiralige Spule ist, die durch Wickeln einer positiven Elektrode (3) und einer negativen Elektrode (4), die einen Separator (5) umgeben, gebildet ist, wobei wenigstens eine der Elektroden eine Verbindung (11) hat, die über das Bündel übersteht, und wobei der Separator einen Bereich (10) aufweist, der aus dem Stapel vorsteht und sich zwischen den Rand der Elektroden (4, 5) und die umgebogene Verbindung einfügt, dadurch gekennzeichnet, dass der Separator (5) eine erste (5a) und eine zweite Schicht (5b) umfasst, die durch die zwei Hälften eines gleichen Streifens gebildet sind, wobei der vorstehende Bereich (10) an der Mitte des Streifens lokalisiert ist.

2. Generator nach Anspruch 1, bei dem der vorstehende Bereich (10) an einer oder mehreren inneren Windungen der spiraligen Wicklung lokalisiert ist.

3. Generator nach Anspruch 1 oder 2, bei dem der mittlere Bereich an nur einer Seite über den Rest des Streifens vorsteht.

4. Generator nach Anspruch 3, bei dem der mittlere Bereich um ca. 1 bis 3 mm über den Rest des Streifens vorsteht.

5. Generator nach einem der vorhergehenden Ansprüche, dadurch gekennzeichnet, dass der mittlere Bereich durch den Streifen selber gebildet ist.

6. Generator nach einem der Ansprüche 1 bis 4, dadurch gekennzeichnet, dass der mittlere Bereich (6) des Streifens durch einen eine Verstärkungsschicht bildenden Zusatz (7) gebildet ist.

7. Generator nach Anspruch 6, dadurch gekennzeichnet, dass der Zusatz durch einen an dem Streifen selber gebildeten und auf den Streifen umgeklappten Fuß gebildet ist.

8. Generator nach Anspruch 6, dadurch gekennzeichnet, dass der Zusatz aus dem gleichen Material wie der Streifen gebildet ist.

## Claims

1. A battery including a spiral electrode assembly obtained by winding a positive electrode (3) and a negative electrode (4) with a separator (5) between them, at least one of said electrodes having a connection (11) that projects from said assembly and said separator having a part (10) that projects from said assembly and which is interleaved between the edge of said electrodes (3, 4) and said connection (11), characterized in that said separator (5) has first (5a) and second (5b) layers formed by two halves of a common strip, said projecting part (10) being localized in the central part (6) of said strip.

2. The battery according to claim 1, characterized in that said projecting part is localized to one or more interior turns of the spiral.

3. The battery according to claim 1 or claim 2, characterized in that said central part projects from one side only of the remainder of the strip.

4. The battery according to claim 3, characterized in that said central part projects from the remainder of the strip by an amount in the range 1 mm to 3 mm.

5. The battery according to any of the preceding claims, characterized in that said central part consists of the strip itself.

6. The battery according to any of claims 1 to 4, characterized in that said central part (6) of said strip consists of an additive (7) forming a reinforcing layer.

7. The battery according to claim 6, characterized in that the additive consists of a lug formed in the strip itself and bent back onto the strip.

8. The battery according to claim 6, characterized in that the additive is made from the same material as the strip.
